# EUROPÄISCHE PATENTSCHRIFT

(11) **EP 1 165 358 B1**
(45) Veröffentlichungstag und Bekanntmachung des Hinweises auf die Patenterteilung: **12.03.2003**
(21) Anmeldenummer: 00926781.6
(22) Anmeldetag: 30.03.2000
(51) Int. Cl.: B62D 15/02, G01D 5/249

(54) **LENKVORRICHTUNG FÜR FAHRZEUGE**
STEERING DEVICE FOR VEHICLES
DISPOSITIF DE DIRECTION DE VEHICULES

(30) Priorität: 01.04.1999 DE 19915105
(43) Veröffentlichungstag der Anmeldung: 02.01.2002
(73) Patentinhaber: Fraunhofer-Gesellschaft zur Förderung der angewandten Forschung e.V., 80636 München (DE); Philipp Walter Industrievertretungen, 70771 Leinenfelden-Echterdingen (DE)
(72) Erfinder: LÜTHJE, Holger, D-38116 Braunschweig (DE); KIST, Rainer, D-79110 Freiburg (DE); REUL, Thomas, D-70771 Leinenfelden-Echterdingen (DE)
(74) Vertreter: Einsel, Martin
(86) Internationale Anmeldenummer: EP0002839
(87) Internationale Veröffentlichungsnummer: WO00059767

(56) Entgegenhaltungen:
- EP-A- 0 825 420
- WO-A-93/20403
- WO-A-95/01510
- US-A- 5 314 036

## Beschreibung

Die Erfindung betrifft eine Lenkvorrichtung für Fahrzeuge, mit einer Lenkwelle, die eine Oberfläche mit Struktur besitzt, mit einem Sensor zum Feststellen der Lenkwellenbewegung und mit einer Schaltung zum Auswerten der Messsignale des Sensors.

Lenkungen von Fahrzeugen können unterschiedlich realisiert werden. Besonders häufig wird eine Zahnstangenlenkung eingesetzt. Ein Fahrer übt dabei über ein Lenkrad ein Drehmoment auf eine Lenksäule aus. Eine direkte Kraftübertragung findet dann weiter über ein Ritzel, also ein Zahnrad, auf eine Zahnstange statt. Die Längsbewegung dieser Zahnstange ist zugleich die Längsbewegung einer Lenkwelle, in oder an der diese Zahnstange eingebracht ist. Die Lenkwelle ihrerseits bewegt das Lenkgestänge mit den daran angeordneten, auf diese Weise gelenkten Fahrzeugrädern.

Um die direkte Kraftübertragung durch den Fahrer zu unterstützen, ist es bei hydraulischen Servolenkungen darüber hinaus bekannt, eine Druckkammer vorzusehen, in der ein Kolben läuft, der mit der Lenkwelle fest verbunden ist. Über die Steuerung des Druckes in der mit Hydrauliköl gefüllten Druckkammer kann der Kolben bewegt und auf diese Weise das Lenkgestänge unterstützend zusätzlich zur Kraftübertragung durch den Fahrer bewegt werden. Altemativ kann der Antrieb des Ritzels auch durch einen Elektromotor unterstützt werden.

Um diese verschiedenen Formen der Unterstützung realisieren zu können, ist es natürlich wünschenswert, ein mit dem Zustand der Lenkung korrelierendes Messsignal zur Verfügung zu haben. Dieses Signal könnte dann für eine geeignete Steuerung zur Lenkungsunterstützung, zur Servolenkung und ähnlichen Zwecken herangezogen werden und auch selbstregelnde Systeme ermöglichen. Über die Steuerung der Servoeinrichtung hinaus wären auch unterstützende Maßnahmen zur Optimierung des Lenk- und Dämpfungsverhaltens von Kraftfahrzeugen oder aber auch eine gleichzeitige Steuerung aller vier Räder und andere intelligente Lenksysteme zu berücksichtigen.

Es bestehen bereits verschiedene Vorschläge, ein mit dem Zustand der Lenkung korrelierendes Signal zu gewinnen.

So wird in der DE 40 29 764 A1 vorgeschlagen, zwischen Lenkrad und Vorderachse eine Längenmesseinrichtung anzuordnen, die auf die Verschiebung der Zahnstange anspricht. Für diese Längenmesseinrichtung werden induktive oder Ohmsche Einrichtungen vorgeschlagen. Aus der EP 0 410 583 B1 ist eine Konzeption mit zwei magnetoresistiven Sensoren bekannt. Hier wird die magnetische Kopplung bei einer Bewegung der Lenkwelle verändert und so eine Positionsbestimmung ermöglicht. Allerdings muss dazu die Lenkwelle geometrisch verändert und auch zusätzlich mit einer Nut versehen werden, was neben Kosten auch zu einer gewissen Störanfälligkeit führt. Mit einem Magneten arbeitet auch die EP 0 376 456 B1. Der auf der Lenkwelle angeordnete Magnet wird von einer Induktionsspule umschlossen. Eine Induktionsänderung kann einer Wegänderung zugeordnet werden.

Aus der DE 197 03 903 A1 und der DE 197 52 346 A1 sind Lenkwinkelsensoren bekannt, die mit Magnetfeldsensoren, sogenannten Hallsensoren, arbeiten.

Diese bekannten Vorschläge haben den Nachteil, dass die Messung jeweils nur eine eingeschränkte Genauigkeit erlaubt. Problematisch ist auch, dass es sich um Relativmessungen handelt, so dass sich Messfehler über die Zeit aufsummieren. Für den Einsatz bei intelligenten Lenksystemen sind diese Vorschläge daher nicht praktikabel.

Aus der DE 37 03 591 C2 ist es bekannt, bei einer Zahnstangenlenkung am Ende der Lenksäule eine Messung des Drehwinkels dieser Lenksäule vorzunehmen, indem eine Induktionsspule oder eine Piezo-Kraftmesszelle entsprechend beaufschlagt werden. Das Ende der Lenksäule trägt jedoch auch die Kraftübertragung auf die Zahnstange und ist sowohl baulich beengt als auch für Messungen ungünstig, zumal hier viele Störungen auftreten können.

Aus der gattungsbildenden US-PS 5,314,036 ist eine Lenkwelle bekannt, bei der auf die Oberfläche entweder Bleche aufgeklebt sind oder die mittels Laserstrahlen teilweise aufgeschmolzen ist, um an der Oberseite einige Strukturen auszubilden. Diese ferritischen oder ferromagnetischen Strukturen sollen dann mittels magnetischer Detektoren erkannt werden. Strukturveränderungen wesentlichen Ausmaßes sind gerade bei Lenkwellen kritisch.

Die WO 93/20403 schlägt schließlich ohne Zusammenhang mit Lenkwellen generell ein optisches Positionsmesssystem vor, bei dem Streifen unterschiedlicher Breite für eine Erkennung mittels eines optischen Sensors genutzt werden sollen.

Aufgabe der Erfindung ist es demgegenüber, eine Lenkvorrichtung vorzuschlagen, bei der ein zum Zustand der Lenkung korrelierendes Signal abnehmbar ist, das besser für die Steuerung solcher intelligenten Lenksysteme geeignet ist.

Diese Aufgabe wird dadurch gelöst, dass auf der Lenkwelle und/oder einer mit der Lenkwelle kraftschlüssig verbundenen Einrichtung kodierte Mikrostrukturen vorgesehen sind, dass die Mikrostrukturen eine Dicke von 100 nm bis 100 µm aufweisen, dass ein Sensor vorgesehen ist, der die. Mikrostrukturen detektiert und zugeordnete Messsignale abgibt und dass eine elektronische Schaltung vorgesehen ist, welcher die Messsignale des Sensors zugeführt werden und welche elektronische Signale zur Steuerung der Lenkung abgibt.

Mit dieser Erfindung wird eine Lenkvorrichtung für Fahrzeuge vorgeschlagen, die eine absolute Positionsmessung erlaubt. Die Nachteile aus dem Stand der Technik sind nicht mehr vorhanden. Die erfindungsgemäße Lenkvorrichtung ist genauer und liefert reproduzierbare Messsignale . Eine Regelung und/oder Steuerung der Bewegung der Lenkwelle wird möglich, insbesondere für intelligente Lenksysteme.

Es entsteht so eine Kombination moderner Oberflächentechniken mit mikrostrukturgegebenen Verfahren einerseits und einem hochauflösenden Sensor, also einem Detektionssystem, mit einer entsprechenden elektronischen Schaltung andererseits. Unter Mikrostrukturen werden hierbei Strukturen mit Abmessungen im Mikrometerbereich verstanden.

Unter "detektieren" werden insbesondere Verfahren verstanden, bei denen ein berührungsloses Erkennen erfolgt, bevorzugt optisch oder magnetisch. Aber auch andere Detektionsmöglichkeiten kommen in Betracht, die auslesen, abtasten, fühlen oder sonst erkennen.

Die Erfindung ermöglicht eine schnelle, hochauflösende und zuverlässige Absolutbestimmung der Position der Lenkwelle; und zwar mit einer Auflösung im unteren Mikrometerbereich. Eine Verfälschung oder Störung durch elektromagnetische Felder oder im Bereich der Lenkung findet nicht statt beziehungsweise ist unerheblich.

Insbesondere bei modernen, sogenannten intelligenten Lenksystemen kann die Erfindung erfolgreich eingesetzt werden.

Es ist möglich, die Lenkwelle selbst mit den Mikrostrukturen auszurüsten. Nachteilig dabei wäre das schwierige Handhaben der gesamten Lenkwelle während des Ausrüstens. Um dies zu umgehen, könnten auswechselbare, kleinere, mit der Lenkwelle kraftschlüssig verbindbare Elemente, beispielsweise in Stabform, entsprechend ausgerüstet und dann eingesetzt werden.

Die Mikrostrukturen sind dabei vorteilhaft so gestaltet, dass sie eine geeignete Kodierung enthalten, die es gestattet, die Position der Lenkwelle absolut zu bestimmen.

Die Detektion der Mikrostrukturen erfolgt vorzugsweise mit Hilfe optischer Abtastverfahren, insbesondere unter Verwendung von Elementen der Mikrosystemtechnik. Unter Mikrosystemtechnik versteht man die Bereiche der Mikrostrukturtechnik, der Mikrooptik und der Faseroptik. Mikrolinsen mit Durchmessern bis hinab zu ca. 10 µm und Brennweiten in der gleichen Größenordnung sind einsetzbar. Bei Einsatz von Glas- oder anderen Fasern und sehr kleinen Durchmessern können die Mikrolinsen direkt auf der Faserstirnfläche fixiert werden. Das Gesamtsystem kann Y-Verzweigungen aufweisen und ist mit einzelnen Modulen zu einem kompakten Mikrosystem integriert. Die Module können gegebenenfalls - etwa um optoelektronische Komponenten sowie die Auswerteelektronik optimal in Bereichen niedriger Temperatur betreiben zu können - über die optischen Fasern räumlich abgesetzt werden.

Vorteilhafterweise werden tribologisch geeignete Schichtsysteme auf die Lenkwelle oder einer damit spielfrei verbundenen linearen Vorrichtung, als Einrichtung oder Messeinrichtung bezeichnet, aufgebracht. Dies kann mittels auf anderen technischen Gebieten bewährten Dünnschichtverfahren erfolgen. Mittels hochauflösender Strukturierungs- und Ätzverfahren werden spezielle Mikrostrukturen erzeugt. Die Mikrostrukturen sind so beschaffen, dass diese mit den Sensoren auch ausgelesen werden können.

Beispielsweise wird der optische Kontrast, also der Unterschied der Reflektivität, der Mikrostrukturen zur darunterliegenden Oberfläche der Lenkwelle so modifiziert, dass eine optische Erkennung der Muster mit Hilfe von miniaturisierten faseroptischen Systemen erfolgen kann. Ein weiteres Beispiel ist die Ausführung der Mikrostrukturen als Reflektions-Hologramm, wobei die Kodierung ähnlich wie bei vorangestelltem Beispiel (segmentweise) ausgeführt ist und das Auslesen durch ein geeignetes miniaturisiertes optisches System erfolgt. Dabei kann die funktionelle Schicht kristallin oder amorph ausgeführt sein und das Hologramm phasen- oder winkelkodiert eingeschrieben sein. Das Hologramm kann für einen Frequenzbereich (monochromatisch) oder für mehrere Frequenzbereiche (farbig) funktionell sein, die Informationen können digital oder analog (in das Hologramm) eingeschrieben sein.

Anstelle von oder zusätzlich zu optischen Sensoren oder optisch detektierbaren Mikrostrukturen können auch andere physikalische Methoden eingesetzt werden. So können die Mikrostrukturen auch in magnetischen Schichten gebildet werden, beispielsweise CoSm oder NdFeB. Als Sensoren könnten dann insbesondere Magnetsensoren eingesetzt werden, die sonst in der Datenspeichertechnik Verwendung finden.

Die Herstellung der Mikrostrukturen auf der Lenkwelle beziehungsweise auf der mit der Lenkwelle kraftschlüssig verbundenen Einrichtung erfolgt in Form von inkrementellen Markierungen. Dabei werden bevorzugt tribologisch optimierte Schichtsysteme unter Einsatz hochauflösender, für dreidimensionale Anwendungen geeigneter lithographischer oder lasertechnischer Methoden bevorzugt. Als lithographische Verfahren kommen dabei fotolithographische, elektronenlithographische, röntgenlithographische und/oder ionenlithographische Verfahren in Betracht.

Multilagen- oder Compositstrukturen können ebenfalls eingesetzt werden.

Die Muster werden bevorzugt in Mikrometerdimensionen realisiert. Die Schichtsysteme gestatten in Verbindung mit einem geeigneten sensorischen Erkennungssystem eine absolute Bestimmung der aktuellen Position, und zwar mit einer Genauigkeit von wenigen Mikrometern.

In einer vorteilhaften Ausgestaltung der Erfindung werden zwei zueinander komplementäre und parallel verlaufende Muster mit einer geeigneten Kodierung, zum Beispiel einer Bit-Kodierung, vorgesehen. Die Markierungsstruktur besteht in einer Ausführungsform aus optisch über die Reflexion unterscheidbaren Streifen, wobei die Streifenmuster binäre L/O-Kodierungen enthalten.

Dadurch kann das in das Lenkgetriebe komplett integrierbare Wegmesssystem aufgrund der Bit- Kodierung in jeder Betriebsphase die aktuelle absolute Position der Lenkung erkennen.

Verschiedene Muster sind denkbar. So lassen sich zum Beispiel ein dual-Code, ein Gray- Code oder auch Stufenkodes einsetzen, die als solche aus einschlägigen mathematischen Verfahren bekannt sind.

Zur Abtastung der Markierungen und der Mikrostrukturen werden insbesondere bevorzugt optische Sensoren, insbesondere faseroptische Doppelsensoren, eingesetzt. Auch Mehrfachsensoren, besonders in Arrayform, sind möglich.

Die Mikrostrukturen werden in einem bevorzugt eingesetzten Verfahren unter Anwendung von Dünnschichttechniken erzeugt. Als Dünnschichttechniken werden vorteilhafterweise PVD (Physical Vapor Deposition)- und/oder CVD (Chemical Vapor Deposition)-Techniken eingesetzt. Die Strukturierung erfolgt dabei wie erwähnt mit lithographischen Techniken.

Die Mikrostrukturen können auch durch Trockenätzverfahren und/oder nasschemische Ätzverfahren hergestellt werden.

Alternativ ist eine Herstellung mit Laserstrahltechniken, beispielsweise direkt schreibenden Laserablationsverfahren und/oder laserlithographischen Verfahren und/oder direkt wirkenden, maskenbezogenen Laserstrukturierungsverfahren möglich.

Die Mikrostrukturen werden bevorzugt aus tribologischen Hartstoffschichtsystemen aufgebaut. Dabei kommen Einzelschichten oder Multilagenschichten in Betracht. Diese bestehen bevorzugt aus Titannitrid (TiN) und/oder Titanaluminiumnitrid (TiAlN) und/oder Titankarbonitrid (TiCN)-Schichten und/oder Aluminiumoxydschichten und/oder amorphen diamantartigen Kohlenwasserstoffschichten mit oder ohne Metalldotierung und/oder amorphe diamantartige Kohlenstoffschichten mit oder ohne Metalldotierung und/oder amorphen CN-Schichten und/oder kubische Bornitridschichten und/oder Diamantschichten.

im Folgenden werden Ausführungsbeispiele der Erfindung anhand der Zeichnungen näher beschrieben. Es zeigen:
- **Figur 1**: einen schematischen Schnitt durch wesentliche Elemente einer erfindungsgemäßen Ausführungsform einer Lenkvorrichtung;
- **Figur 2**: eine alternative Ausführungsform zu Figur 1;
- **Figur 3**: eine schematische Darstellung eines mikrosystemtechnischen Sensorsystems für eine erfindungsgemäße Ausführungsform der Lenkvorrichtung;
- **Figur 4**: eine detaillierte Darstellung eines Elementes aus Figur 3;
- **Figur 5**: eine detaillierte Darstellung einer alternativen Ausführungsform dieses Elementes aus Figur 3;
- **Figur 6**: eine detaillierte Darstellung eines anderen Elementes aus Figur 3;
- **Figur 7**: eine beispielhafte Darstellung einer Mikrostruktur;
- **Figur 8**: eine alternative Ausführungsform von Figur 7;
- **Figur 9**: eine weitere alternative Ausführungsform von Figur 7;
- **Figur 10**: ein schematischer Schnitt durch eine Mikrostruktur;
- **Figur 11**: die Ausführungsform aus Figur 10 nach einem möglichen Weiterbearbeitungsschritt;
- **Figur 12**: ein schematischer Schnitt durch eine andere Ausführungsform ähnlich Figur 10;
- **Figur 13**: ein schematischer Schnitt durch eine dritte Ausführungsform ähnlich Figur 10;
- **Figur 14**: die Ausführungsform aus Figur 13 nach einem möglichen Weiterbearbeitungsschritt; und
- **Figur 15**: eine schematische Darstellung einer Ausführungsform eines Sensors.

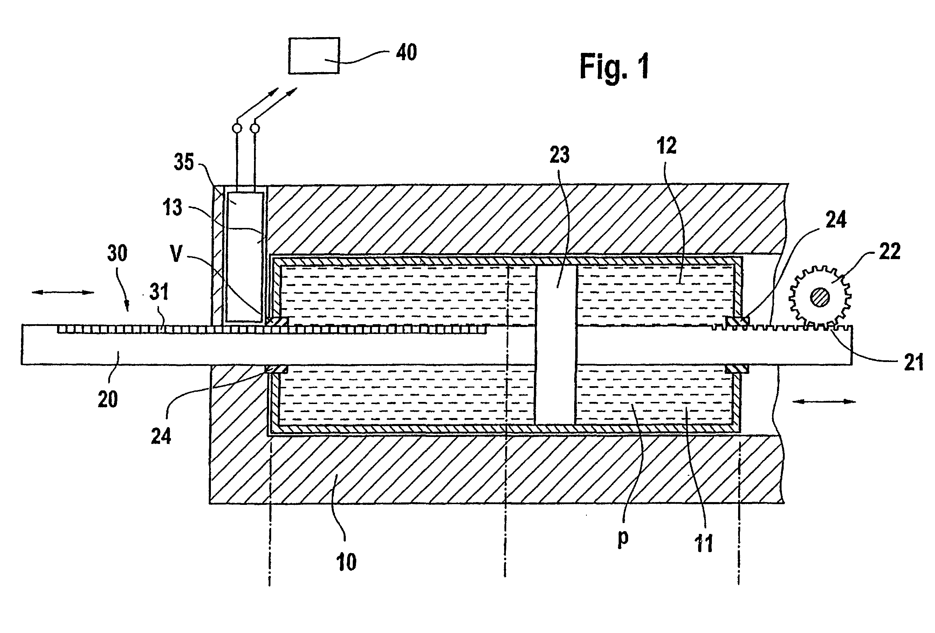

Die in **Figur 1** dargestellte Ausführungsform einer erfindungsgemäßen Lenkvorrichtung besitzt einen Montageblock 10, in deren Inneren sich eine Druckkammer 11 befindet, die weitgehend mit Hydrauliköl 12 angefüllt ist. Das Hydrauliköl 12 steht unter einem Druck p. Der Montageblock 10 ist hier rein schematisch dargestellt; er nimmt hier eine im wesentlichen zylinderförmige Ausbildung an, wobei sich wesentliche Teile des Montageblocks 10 noch nach rechts aus der Figur 1 hinaus erstrecken.

Etwa längs der Zylinderachse des Montageblocks 10 verläuft die Lenkwelle 20. Die Lenkwelle 20 erstreckt sich also durch die Druckkammer 11 mit dem Hydrauliköl 12. Die Lenkwelle 20 ist mit einer Zahnstange 21 versehen, die hier in Figur 1 durch entsprechende Zahnmarkierungen angedeutet ist. Die Zahnstange 21 wird durch ein Ritzel 22 angetrieben. Dieses Ritzel steht mit der Lenkung eines nicht dargestellten Fahrzeugs in Verbindung. Wird das Lenkrad beispielsweise eines Personenkraftfahrzeugs gedreht, überträgt sich das entsprechende Drehmoment über das Ritzel 22 auf die Zahnstange 21 und verschiebt mit ihr die gesamte Lenkwelle 20 längs der Achse durch den Montageblock 10.

Auf der Lenkwelle 20 sitzt außerdem in kraftschlüssiger Verbindung ein Kolben 23. Dieser Kolben 23 ist innerhalb der Druckkammer 11 und damit innerhalb des Hydrauliköls 12 angeordnet, während das Ritzel 22 und die Zahnstange 21 sich außerhalb der Druckkammer 11 befinden.

Die Lenkwelle 20 tritt also an zwei Stellen durch die Wandung der Druckkammer 11 hindurch. Beide Stellen sind mittels Dichtungen 24 abgedichtet, bevorzugt mittels Vitondichtungen. Der Kolben 23 bewegt sich aufgrund seiner kraftschlüssigen Verbindung mit der Lenkwelle 20 auch längs mit dieser. Er füllt den gesamten Querschnitt der Druckkammer 11 aus. Infolgedessen kann auch durch Druckveränderungen des Hydrauliköls 12 der Kolben 23 und damit die Lenkwelle 20 bewegt werden. Dieses ist auch ein übliches Verfahren, um die vom Benutzer des Fahrzeugs über das Ritzel 22 ausgeübten Kräfte zu verstärken.

Geeignete Durchmesser von Lenkwellen 20 liegen bei etwa 20 bis 40 mm, geeignete Durchmesser von Druckkammern 11 bei etwa 40 bis 70 mm, Lenkwellen 20 haben beispielsweise Längen von größenordnungsmäßig 800 mm, die Länge der Druckkammer 11 kann zum Beispiel 200 bis 400 mm betragen.

Natürlich sind gegebenenfalls ganz andere Größenabmessungen geeignet, je nach den Anforderungen der Lenkvorrichtung.

In dem Montageblock 10 ist außerhalb der Druckkammer 11 noch eine Montagebohrung 13 eingelassen. Diese Montagebohrung 13 ragt von der Außenwandung des Montageblocks 10 bis zu der Durchbohrung, in der sich die Lenkwelle 20 befindet. In dieser Montagebohrung 13 befindet sich ein Sensor 35. Dieser Sensor 35 kann beispielsweise in den Enden einer Glasfasersensorik bestehen.

Gerade in diesem Bereich ist die Lenkwelle 20 auf ihrer Außenseite mit einer Markierung 30 versehen. Die Markierung 30 besteht aus Mikrostrukturen 31, die auf der Oberseite der Lenkwelle 20 angeordnet sind. Diese Mikrostrukturen 31 sind in Achsrichtung der Lenkwelle 20 so kodiert, dass bei einer Längsbewegung der Lenkwelle 20 relativ zum Montageblock 10 jeweils andere Bitmuster unter dem Sensor 35 vorbeilaufen. Die Signale des Sensors 35 werden zu einer elektronischen Schaltung 40 geführt (in Figur 1 nicht näher dargestellt). Die elektronische Schaltung 40 kann dann aus den Ablesewerten des Sensors 35 eine entsprechende Absolutwertbestimmung der Lage der Lenkwelle 20 im Verhältnis zum Montageblock 10 abgeben.

Außer der Längsbewegung der Lenkwelle 20 sind für die Lenkung weitere Bewegungen der Lenkwelle nicht interessant. Daher ist in der Figur 1 auch nichts über etwaige Rotationen der Lenkwelle 20 dargestellt. Hier sind alle Varianten denkbar, die ein entsprechendes Laufen des Ritzels 22 auf der Zahnstange 21 gewährleisten.

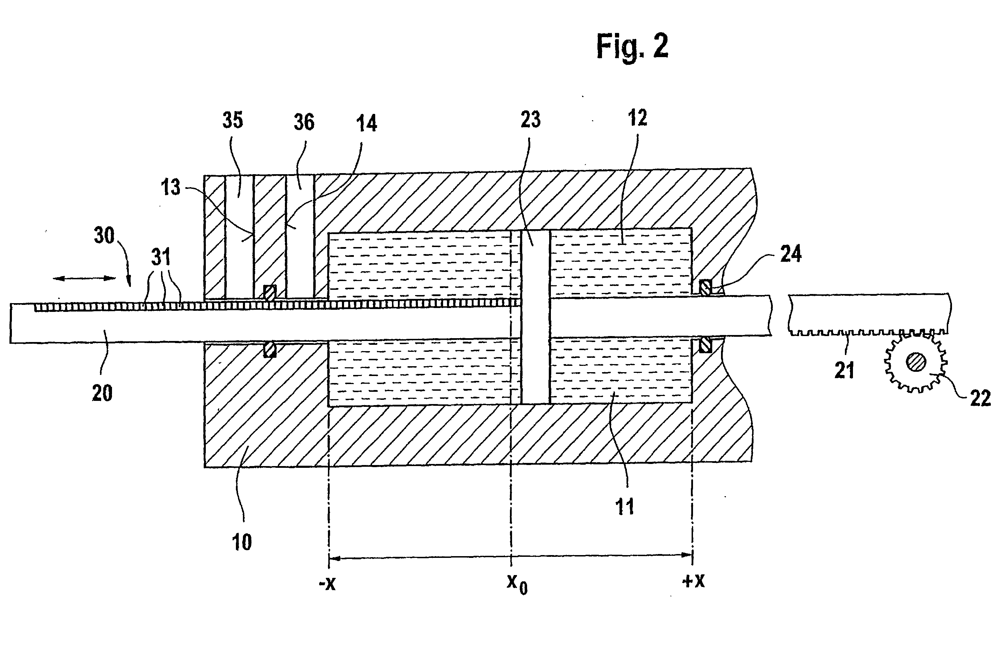

In **Figur 2** ist eine andere alternative Ausführungsform mit einer ähnlichen Darstellung wie in Figur 1 gezeigt.

Auch hier ist der Montageblock 10 mit der Druckkammer 11 und dem Hydrauliköl 12 zu erkennen. Durch den Montageblock 10 und die Druckkammer 11 läuft wiederum die Lenkwelle 20 mit der Zahnstange 21. Das Ritzel 22 treibt auch hier die Zahnstange 21 an. Auf der Lenkwelle 20 sitzt außerdem ein Kolben 23, der innerhalb der Druckkammer 11 laufen kann.

Im Unterschied zu Figur 1 ist hier nicht nur eine Montagebohrung 13, sondern noch eine weitere Montagebohrung 14 außerhalb der Druckkammer 11 vorgesehen.

Dieser Unterschied ermöglicht auch das Anordnen von zwei Sensoren 35 und 36. Dadurch wird das Auslesen von redundanten oder komplementären oder auch in anderer Form doppelt kodierten Mikrostrukturen 31 der Markierung 30 möglich. Die Sensoren 35 und 36 sind bevorzugt faseroptische Reflektionssensoren. Die Lichtquelle der Reflektionssensoren wird durch lichtemittierende Dioden (LED) gebildet, wobei spektral eine Anpassung der LED's an das verwendete Hydrauliköl 12 in der Druckkammer 11 erfolgt. Als Hydrauliköl 12 kann bevorzugt Pentosin verwendet werden.

Der Druck p des Hydrauliköls12 in der Druckkammer 11 wird über Ventile in einem Ventilsteuergehäuse geregelt (nicht dargestellt).

Die Lenkwelle 20 ist an ihren Durchtrittsöffnungen in die Druckkammer 11 und aus der Druckkammer 11 heraus durch Dichtungen 24 abgedichtet, die insbesondere Vitondichtungen sind. Die Lenkwelle 20 hat eine Mittenposition, die dem Lenkwinkel 0° entspricht. Dies ist in der Figur 2 als Mittenposition X₀ angedeutet. Nach rechts beziehungsweise nach links findet dann die Bewegung in Richtung der Lenkwellenposition +X (rechts) beziehungsweise in Richtung -X (links) statt.

Diese jeweiligen Endpositionen entsprechen einem Linearhub, der typisch bei ± 75 mm liegen kann. Je nach Fahrzeugtyp ergeben sich daraus unterschiedliche Anschlagwinkel der Lenkung. In Einzelfällen kann je nach Fahrzeugtyp dieser Linearhub auch kleiner sein, beispielsweise ± 50 mm betragen.

Die beiden Montagebohrungen 13 und 14 sind hier außerhalb der Druckkammer 11 angeordnet, so dass auch die beiden Einzelsensoren 35 und 36 außerhalb angeordnet sind. Es ist auch möglich, hier ein integriertes Sensorpaar vorzusehen.

In einer anderen Ausführungsform können der oder die Sensoren 35 und 36 auch innerhalb der Druckkammer 11 positioniert werden. Der Sensor kann beispielsweise dann einen Abstand von der Lenkwelle 20 aufweisen, als optischer Sensor also durch das Hydrauliköl 12 die Daten der Lenkwelle 20 erfassen.

Dadurch wird es ihm möglich, zusätzlich zum Ablesen der Mikrostrukturen 31 der Markierung 30 auf der Lenkwelle 20 eine Aussage über die Trübung des Hydrauliköls 12 in der Druckkammer 11 zu liefern. Diese Aussage kann als Kriterium für das Auswechseln des Hydrauliköls 12 eingesetzt werden. Je nach Trübung und spektraler Absorbtion des Hydrauliköls 12 wird eine geeignete Sendewellenlänge für den optischen Sensor 35 ausgewählt. Ein solches System funktioniert auch bei Verschmutzung durch Abriebpartikel oder einem Ölfilm und besitzt vorzugsweise aus Sicherheitsgründen entsprechende Redundanz, Fehlertoleranz und Azimuttoleranz.

Die Sensoren können faseroptische Sensoren mit zwei Einzelfasern sein, wie dies in der Figur 2 angedeutet ist, diese können (nicht dargestellt) parallel der gegeneinander geneigt sein, um ankommendes und reflektiertes Licht aufzunehmen. Denkbar ist es aber auch, faseroptische Reflektionssensoren in Y-Struktur einzusetzen oder aber auch Anordnungen mit Faserzeilen oder Faserbündeln zu berücksichtigen.

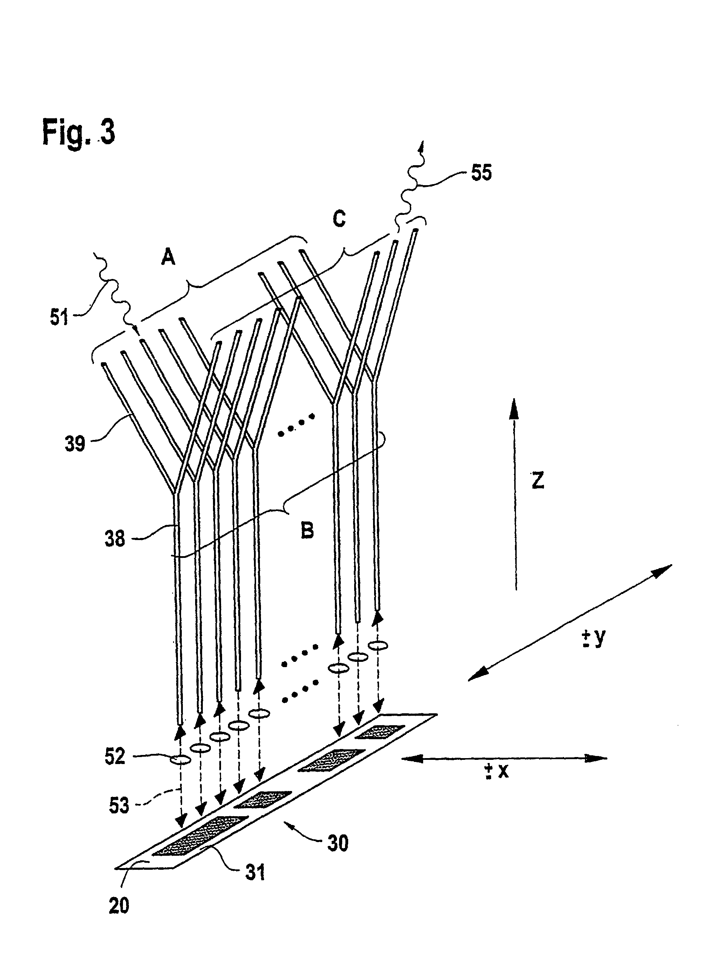

Der beziehungsweise die Sensoren 35 und 36 oder auch ein Sensorsystem 37 (siehe für ein solches System Figur 3) werden dabei als Sender beziehungsweise als Empfänger eingesetzt und können mit insbesondere temperaturfester Aufbau- und Verbindungstechnik direkt an die Faser angekoppelt sein. Alternativ können sie auch über eine Zuleitungsfaser angeordnet werden, die sich in einem Bereich mit niedrigerer Temperatur befindet. In einer weiteren Ausführungsform wird das Sensormodul zur einfacheren Montage als ein kompaktes, miniaturisiertes (mikrotechnisches) Modul konfektioniert und im System montiert.

In einer anderen, nicht dargestellten Ausführungsform wird zur Erhöhung der Zuverlässigkeit beziehungsweise der Störsicherheit noch zusätzlich vorgesehen, dass zwei Sensoren 35 azimutal nebeneinander plaziert werden. Diese beiden Sensoren tasten dann zwei zueinander komplementäre Bitmuster ab, die beide jeweils als dünnfilmtechnisch aufgebrachte, parallel angeordnete Einzel-Markierungen 30 mit entsprechenden Mikrostrukturen 31 realisiert sind.

In Figur 3 ist eine schematische Darstellung einer Ausführungsform einer Markierung 30 mit Mikrostrukturen 31 dargestellt. Die Lenkwelle 20 ist hier rein schematisch als Ausschnitt wiedergegeben; sie erstreckt sich parallel zur angedeuteten x-Richtung.

Zu erkennen ist ferner ein Sensorsystem mit einem Array aus faseroptischen Y-Verzweigungen 38. Das Sensorsystem 37 besitzt ein Modul A zur Erzeugung und Einkopplung des Lichts 51 in die Eingangs- oder Einkoppelfasern 39 des faseroptischen Y-Verzweigers 38.

Vorgesehen ist auch ein Modul B mit in y-Richtung angeordnetem Array aus Linsen 52, insbesondere Mikrolinsen, zur Erzeugung paralleler Ausgangs-Lichtbündel. Die Ausgangs-Lichtbündel 53 fallen auf die Mikrostrukturen 31 der Markierung 30 auf der Lenkwelle 20. Diese Mikrostrukturen 31 bilden eine Folge von Sequenzen. Es findet eine positionsspezifische selektive Retroreflektion statt.

Das retroflektierende Licht gelangt wieder durch die Linsen 52 in die Fasern des Moduls B und von dort zu einem Modul C zur Auskopplung und Detektion des retroflektierten und den faseroptischen Y-Verzweiger 38 verlassenden Lichts 55.

In der Figur 3 ist außerdem
- **± x**: die axiale Richtung, also die Bewegungsrichtung der Lenkwelle;
- **± y**: die azimutale Richtung, also die Richtung, in der das positionsspezifische Bitmuster angeordnet ist; und
- **z**: die Einbaurichtung des Sensorsystems.

Die Koordinaten x und z sind zueinander orthogonal; die Koordinate z weist in Richtung der zu x und z orthogonalen Tangente an die Oberfläche der Lenkwelle 20.

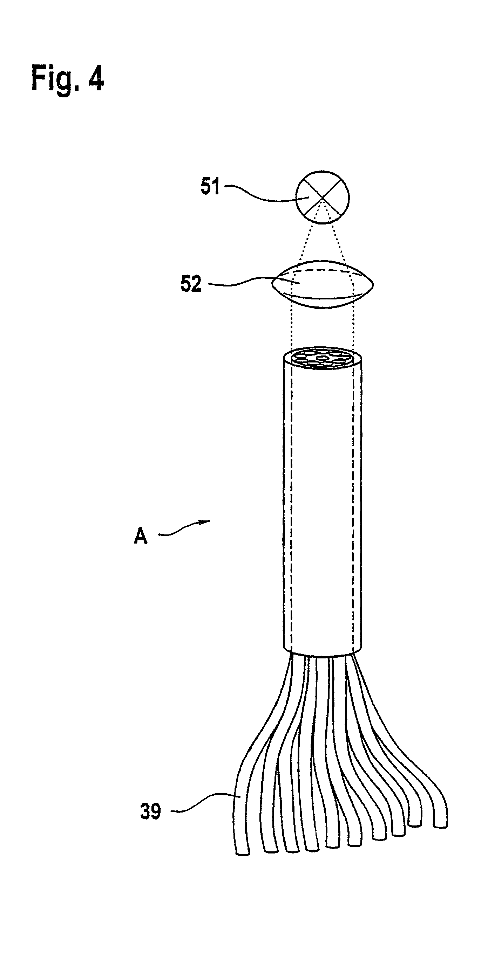

**Figur 4** zeigt ein Detail aus Figur 3, nämlich eine erste Version eines Sende- und Einkoppelmoduls A mit Einzelquelle 51, Einzellinse 52 und Faserbündel aus Einkoppelfasern 39 des Y-Verzweigers 38.

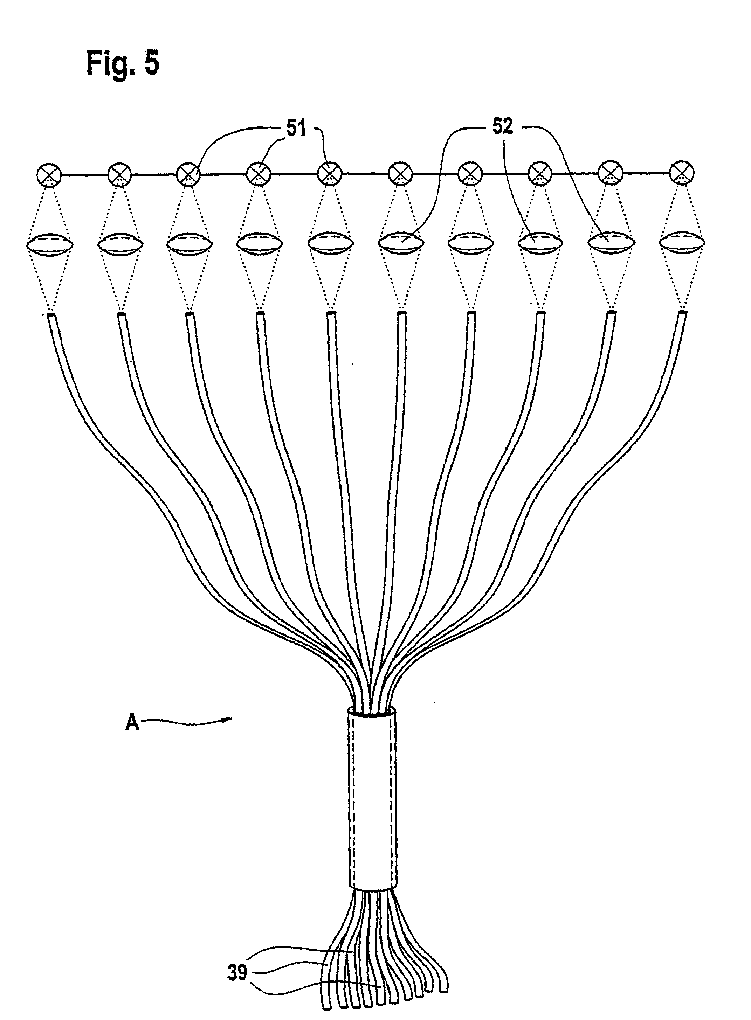

**Figur 5** zeigt als Alternative zu Figur 4 eine andere Version eines Sende- und Einkoppelmoduls A mit einem Array aus Linsen 52. Die Fasern werden gebündelt und anschließend als Einkoppetfasern 39 des Y-Verzweigers 38 wieder vereinzelt.

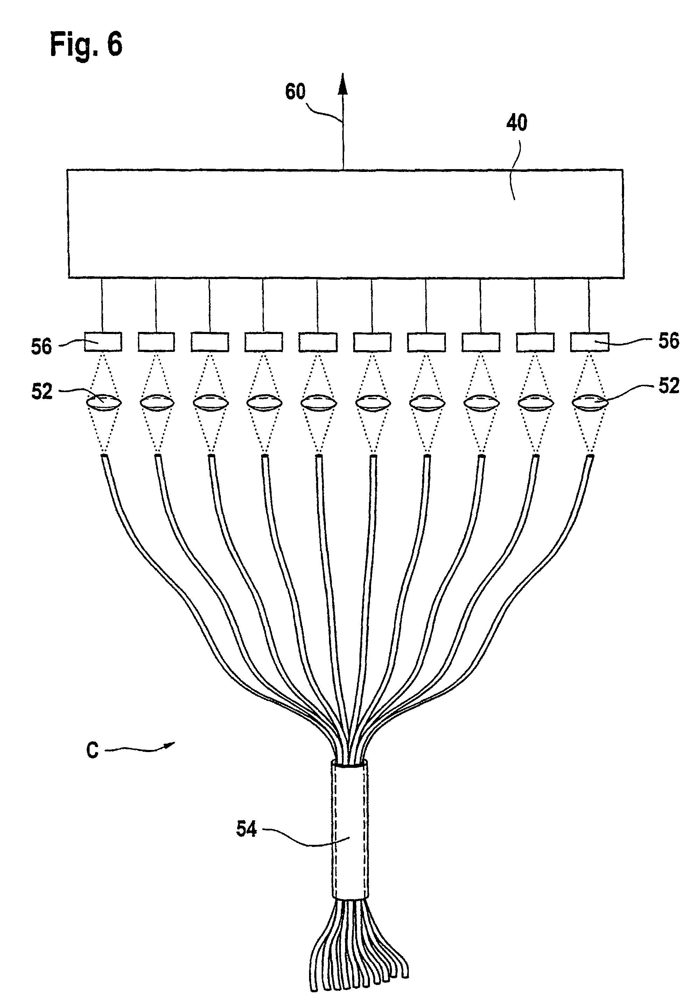

**Figur 6** zeigt ein anderes Detail aus Figur 3, nämlich eine Ausführungsform eines Auskoppel-, Empfangs- und Auswertemoduls C mit streckenweise gebündelten Auskoppelfasem 54, einem Array aus Linsen 52, Detektorzeile 56, der elektronischen Schaltung 40 mit der Auswerteelektronik und Ausgangssignal 60 mit der "Position der Lenkwelle".

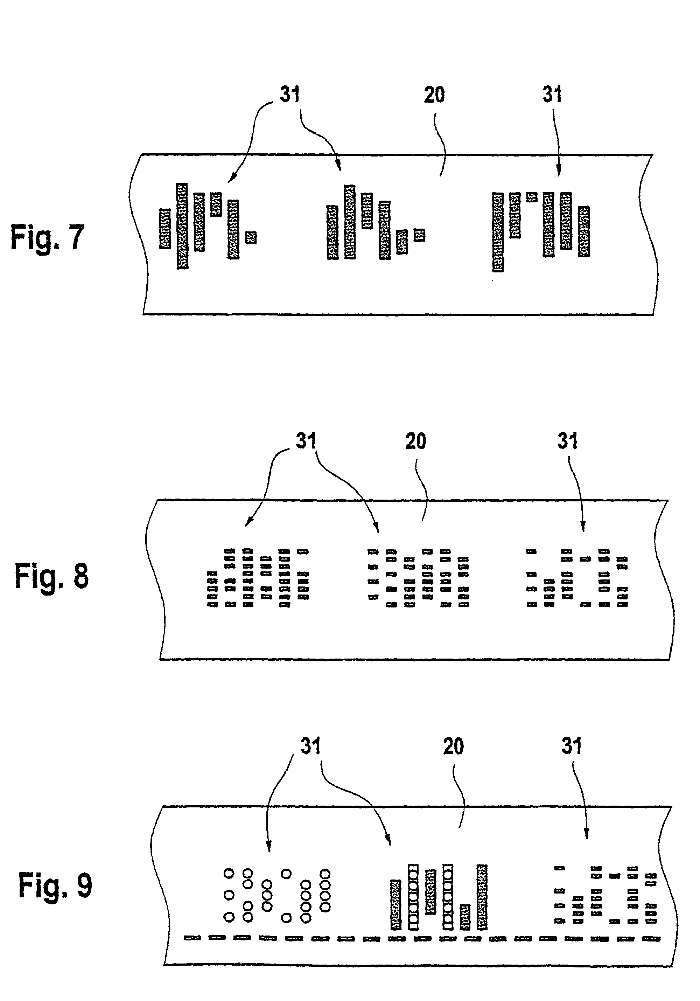

**Figur 7** zeigt eine 8 Bit Kodierung in radialer Richtung und periodische Wegmessmarken in axialer Richtung.

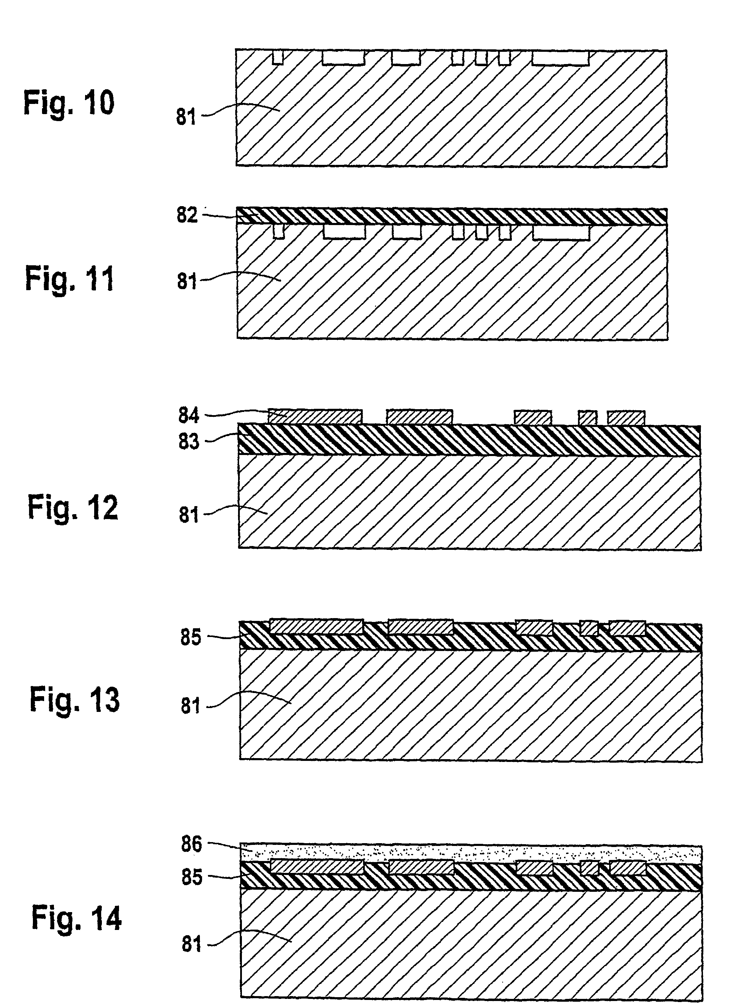

**Figur 8** zeigt ein Anordnungsbeispiel von Blöcken mit individuellen Kodierungen.

**Figur 9** zeigt ein Anordnungsbeispiel von unterschiedlichen Struktursequenzen und einer Leitstruktur mit periodischer Teilung zur Spurfindung bei azimutaler Verschiebung.

In den **Figuren 10 bis 14** sind Ausführungsbeispiele für mögliche Herstellungsverfahren der Mikrostrukturen 31 dargestellt. Auf einem Grundkörper 81, der auch die Lenkwelle 20 oder eine andere kraftschlüssig mit der Lenkwelle 20 gekoppelte Vorrichtung sein kann, wird ein kodiertes Muster erzeugt. Für eine Variante, bei der die Detektionmittels optischer Austastung der Muster erfolgen soll, wird der Grundkörper 81 mit einem fokussierten Laserstrahl an der Oberfläche so behandelt, dass an der Einwirkungsstelle laserablative Prozesse zu Abtragungen und damit zu bleibenden Markierungen führen (vgl. Figur 10).

Vorzugsweise werden wegen der hohen Auflösung hierfür Eximerlaser verwandt. Das so erzeugte Muster kann anschließend mit einer reibungs- und verschleißmindernden Schicht bedeckt werden. Dies ist in Figur 11 gezeigt. Als derartige Deckschicht eignet sich im Bereich der Lenkwelle so hervorragend eine metalldotierte amorphe Kohlenwasserstoffschicht, die in einer Dicke zwischen 0,5 µm und 5 µm mittels bekannter plasmaunterstützter PACVD-Verfahren (Magnetronsputterverfahren mit Substratbias und einem Kohlenwasserstoffgas, vorzugsweise C₂H₂) aufgetragen wird. Als Dotierungsmetall wird bevorzugt für diese Anwendung Titan oder Wolfram verwandt. Die metalldotierte amorphe Kohlenwasserstoffschicht wird zum Beispiel unter Verwendung einer Großraum-Sputteranlage der Firma Leybold vom Typ Tritec 1000 herstellt, wobei zwei Wolfram-Targets installiert werden. Die Anlage besitzt einen Rotationshalter, der je nach Ausstattung bis zu 20 Lenkwellen aufnehmen kann. Nach dem üblichen Pumpvorgang, der die Kammer auf ca. 10⁻⁵ hPa abpumpt, wird Argon bis zu einem Druck von 3 x 10⁻³ hPa eingelassen und die Substrate bei 100 bis 300 V Biaspotential durch lonenbeschuss an der Oberfläche gereinigt. Dabei werden die Targets bei ca. 6 KW vorgesputtert. Ohne Unterbrechung des Plasmas wird durch Öffnen der Targetabdeckungen und unter sukzessiver Zugabe von C₂H₂ zum Prozess eine gradierte Schicht aus wolframdotiertem Kohlenwasserstoff gebildet. Der C₂H₂-Gasfluss wird nach einigen Minuten so justiert, dass das Verhältnis von Wolfram zu Kohlenstoff in der Schicht 5 bis 10 at % entspricht. Während der Herstellung der metalldotierten amorphen Kohlenwasserstoffschicht werden die Substrate mit einem Biaspontential zwischen 100 und 300 V, vorzugsweise 200 V angekoppelt. Unter diesen Bedingungen wird in 0,5 Stunde eine Schichtdicke von 1 µm aufgebracht.

In den Figuren 12 bis 14 sind weitere Lösungswege gezeigt, die die Anwendung einer strukturierten Schicht beschreiben. Dabei kann die Schichtstruktur für unterschiedliche Sensorprinzipien dienen. Bei optischer Detektion besitzen die Schichtstrukturen beispielsweise einen geeigneten Kontrast (Flächen oder Kantenkontrast) zu der umgebenden Oberfläche. Die Schichtstruktur kann jedoch auch aus einem magnetischen Material erzeugt werden und mit Hilfe eines magnetischen Sensors oder einer magnetischen Sensormatrix ausgelesen werden. In diesem Fall wird eine magnetische Schicht, vorzugsweise aus CoSm oder FeSi oder NdFeB mit und ohne Zusatzstoffe verwandt.

Die Lenkwelle 20 beziehungsweise der Grundkörper 81 wird in einem Vakuumprozess mit in diesem Fall zwei Schichten 83, 84 beschichtet, wobei die untere Schicht 23 beziehungsweise eine metalldotierte amorphe Kohlenwasserstoffschicht ist, auf die eine TiN-Schicht abgeschieden wird. Die Dicke der oberen Schicht 84 beträgt ca. 0,5 µm. Bevorzugterweise wird TiN in Kombination mit einer Ti-dotierten Kohlenwasserstoffschicht verwandt. Dabei wird das Ethin lediglich durch Stickstoff ausgetauscht, wiederum ohne Unterbrechung des Plasmas. Die Strukturierung der Schicht 84 erfolgt fotolithographisch, indem die beschichtete Lenkwelle 20 mit einem Fotolack beschichtet wird. Die Dicke beträgt ca. 2,5 µm. Die Muster werden dann mittels einer Maske großflächig auf der Lenkwelle erzeugt.

Nach der Resistentwicklung wird die TiN-Schicht 84 nasschemisch unter Anwendung bekannter Ätzmittel dort entfernt, wo sich keine Fotoresistmuster befinden.

Die Muster können auch versenkt, das heißt planarisiert hergestellt werden, wie **Figur 13** zeigt. In diesem Fall wird die Lenkwelle 20 mit zum Beispiel einer W-dotierten amorphen Kohlenwasserstoffschicht 85 beschichtet und anschließend eine Fotoresistmuster darauf erzeugt. Mit Hilfe der Fotoresistmaskierung wird dann in einem reaktiv geführten Plasmaätzprozess (Ätzgase Ar/SF₆) eine Vertiefung von 0,2-1,0 µm in die W-dotierte amorphe Kohlenwasserstoffschicht geätzt. Unter Beibehaltung der Fotoresistmaske wird dann die Vertiefung durch Sputter von zum Beispiel TiN wieder aufgefüllt. Die Oberfläche ist dadurch auch mikroskopisch glatt.

Eine weitere Ausführung ist in **Figur 14** enthalten, wo eine tribologisch optimierte Schicht 86 für den vorbeschriebenen Unterbau aufgebracht wird. In diesem Fall können für die Mustererzeugung auch Schichtmaterialien verwandt werden, die nicht unbedingt gute tribologische Eigenschaften besitzen.

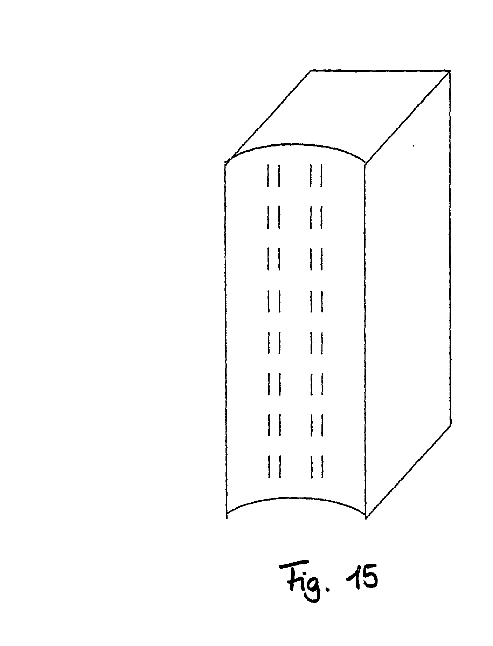

In **Figur 15** ist eine Ausführungsform eines Sensors 35 dargestellt. Es handelt sich um einen magnetischen Sensor. Er besteht aus einer zeilenartigen Anordnung von Magnetsensoren, die eine magnetische Struktur zum Beispiel in einem 8-Bit-Code auslesen können. Dargestellt sind die Polstrukturen des Lesekopfs, wobei durch die Anwendung einer zweiten Zeile die Betriebssicherheit verbessert und die Anzahl der Kodierungen erhöht wird. Der Sensor 35 kann zum Beispiel aus bekannten magnetoresistiven oder induktiven Einzelsensoren, die in ebenfalls bekannten Dünnschichttechniken erzeugt werden, hergestellt werden. Um einen minimalen Abstand zu den magnetischen Mikrostrukturen auf der Lenkwelle 20 zu gewährleisten, sind die Polstrukturen der Lesesensoren auf einem an den Durchmesser der Lenkwelle 20 angepassten Kreisbogen angeordnet.

### Bezugszeichenliste

- 10: Montageblock
- 11: Druckkammer
- 12: Hydrauliköl
- 13: Montagebohrung
- 14: Montagebohrung

- 20: Lenkwelle
- 21: Zahnstange
- 22: Ritzel
- 23: Kolben
- 24: Dichtung

- 30: Markierung
- 31: Mikrostrukturen
- 35: Sensor
- 36: Sensor
- 37: Sensorsystem
- 38: 38 Y-Verzweiger
- 39: Einkoppelfaser

- 40: elektronische Schaltung

- 51: Quelle
- 52: Linse
- 53: Ausgangs-Lichtbündel
- 54: Auskoppelfasern
- 55: Licht
- 56: Detektorzeile

- 60: Ausgangssignal
- 81: Grundkörper
- 82: Schicht
- 83: Schicht
- 84: Schicht
- 85: Schicht
- 86: Schicht

- A: Modul
- B: Modul
- C: Modul

- p: Druck
- X₀: Mittenposition
- +X: Lenkwellenposition nach rechts
- -X: Lenkwellenposition nach links
- y: azimutale Richtung
- z: Einbaurichtung des Sensors

## Patentansprüche

1. Lenkvorrichtung für Fahrzeuge, mit einer Lenkwelle (20), die eine Oberfläche mit Struktur besitzt, mit einem Sensor (35) zum Feststellen der Lenkwellenbewegung und mit einer Schaltung (40) zur Auswertung der Messsignale des Sensors (35),
**dadurch gekennzeichnet,**
**dass** auf der Lenkwelle (20) und/oder einer mit der Lenkwelle kraftschlüssig verbundenen Einrichtung kodierte Mikrostrukturen (31) vorgesehen sind,
**dass** die Mikrostrukturen (31) eine Dicke von 100 nm bis 100 µm aufweisen, dass ein Sensor (35) vorgesehen ist, der die Mikrostrukturen (31) detektiert und zugeordnete Messsignale abgibt, und
**dass** eine elektronische Schaltung (40) vorgesehen ist, welcher die Messsignale des Sensors (35) zugeführt werden und welche elektronische Signale zur Steuerung abgibt.

2. Lenkvorrichtung nach Anspruch 1,
**dadurch gekennzeichnet,**
**dass** die Mikrostrukturen (31) eine Folge von Sequenzen bilden, die in axialer Richtung auf der Lenkwelle (20) und/oder der kraftschlüssig damit verbundenen Einrichtung angeordnet sind.

3. Lenkvorrichtung nach Anspruch 2,
**dadurch gekennzeichnet,**
**dass** jede Sequenz aus Mehrfachstrukturen und/oder Einzelstrukturen besteht, die räumlich in azimutaler und/oder axialer Richtung angeordnet sind und die eine individuelle oder blockweise Kodierung enthalten.

4. Lenkvorrichtung nach Anspruch 2 oder 3,
**dadurch gekennzeichnet,**
**dass** die Sequenzen eine Bitkodierung enthalten.

5. Lenkvorrichtung nach einem der Ansprüche 2 bis 4,
**dadurch gekennzeichnet,**
**dass** mehrere Sequenzen zu einem Block zusammengefasst werden, wobei die Blöcke durch eine Kodierung voneinander unterscheidbar sind.

6. Lenkvorrichtung nach einem der Ansprüche 2 bis 5,
**dadurch gekennzeichnet,**
**dass** die in axialer Richtung angeordneten Sequenzen mehrfach parallel über den Umfang der Lenkwelle (20) und/oder der Einrichtung versetzt in redundanter Ausführung vorhanden sind.

7. Lenkvorrichtung nach einem der vorhergehenden Ansprüche,
**dadurch gekennzeichnet,**
**dass** die Mikrostrukturen (31) komplementär ausgeführt sind.

8. Lenkvorrichtung nach einem der vorhergehenden Ansprüche,
**dadurch gekennzeichnet,**
**dass** die kleinsten Details der Mikrostrukturen (31) laterale Dimensionen von 5 nm bis 5mm aufweisen.

9. Lenkvorrichtung nach Anspruch 8,
**dadurch gekennzeichnet,**
**dass** die kleinsten Details der Mikrostruktruen (31) laterale Dimensionen von 1µm bis 1mm aufweisen.

10. Lenkvorrichtung nach einem der vorhergehenden Ansprüche,
**dadurch gekennzeichnet,**
**dass** die Mikrostrukturen (31) eine ebene Oberfläche aufweisen und mittels Planarisierungstechnik eingeebnet sind.

11. Lenkvorrichtung nach einem de vorhergehenden Ansprüche,
**dadurch gekennzeichnet,**
**dass** die Mikrostrukturen aus tribologischen Hartstoffschichtsystemen aufgebaut oder mit diesen abgedeckt sind.

12. Lenkvorrichtung nach Anspruch 11,
**dadurch gekennzeichnet,**
**dass** die Hartstoffschichtsysteme Einzelschichten oder Multilagenschichten aus TiN und/oder TiAIN und/oder TiCN-Schichten undloder Aluminiumoxid-Schichten und/oder amorphe diamantartige Kohlenwasserstoffschichten mit oder ohne Metalldotierung und/oder amorphe CN-Schichten und/oder kubische Bornitridschichten und/oder Diamantschichten sind.

13. Lenkvorrichtung nach einem der vorhergehenden Ansprüche,
**dadurch gekennzeichnet,**
**dass** die Sensoren (35) in Form einer Zeile und/oder eines Arrays angeordnet sind.

14. Lenkvorrichtung nach einem der vorhergehenden Ansprüche,
**dadurch gekennzeichnet,**
**dass** die Sensoren (35) optische Sensoren sind.

15. Lenkvorrichtung nach Anspruch 14,
**dadurch gekennzeichnet,**
**dass** die Sensoren (35) optische Glasfasersensoren sind.

16. Lenkvorrichtung nach Anspruch 15,
**dadurch gekennzeichnet,**
**dass** die Sensoren (35) faseroptische Doppel- oder Mehrfachsensoren sind.

17. Lenkvorrichtung nach einem der Ansprüche 14 bis 16,
**dadurch gekennzeichnet,**
**dass** die Mikrostrukturen als Reflektions-Hologramm ausgeführt sind.

18. Lenkvorrichtung nach einem der Ansprüche 1 bis 13,
**dadurch gekennzeichnet,**
**dass** die Sensoren (35) Magnetsensoren sind.

19. Lenkvorrichtung nach Anspruch 18,
**dadurch gekennzeichnet,**
**dass** die Magnetsensoren zeilenartig zur Auslesung eines Mehr-Bit-Codes, insbesondere eines 8-Bit-Codes, angeordnet sind.

20. Lenkvorrichtung nach Anspruch 18 oder Anspruch 19,
**dadurch gekennzeichnet,**
**dass** der Sensor (35) einen Lesekopf mit Posterstrukturen aufweist, welche auf einem an den Durchmesser der Lenkwelle (20) angepassten Kreisbogen angeordnet sind.

21. Verfahren zur Herstellung einer Lenkvorrichtung nach einem der vorhergehenden Ansprüche,
**dadurch gekennzeichnet,**
**dass** die Mikrostrukturen (31) mit einer Dicke von 5 nm bis 1mm auf der Lenkwelle (20) oder der mit der Lenkwelle kraftschlüssig verbundenen Einrichtung unter Anwendung von Dünnschichttechniken erzeugt werden und dass die Strukturierung mit photolithographischen Techniken erfolgt.

22. Verfahren nach Anspruch 21,
**dadurch gekennzeichnet,**
**dass** die Dünnschichttechnik eine PVD- und/oder CVD-Technik ist.

23. Verfahren nach Anspruch 21 oder 22,
**dadurch gekennzeichnet,**
**dass** die Mikrostrukturen durch ein Trockenätzverfahren und/oder nasschemisches Ätzverfahren ausgebildet werden.

24. Verfahren zur Herstellung einer Lenkvorrichtung nach einem der Ansprüche 1 bis 20,
**dadurch gekennzeichnet,**
**dass** die Mikrostrukturen einer. Laserstrahltechnik hergestellt werden.

25. Verfahren nach Anspruch 24,
**dadurch gekennzeichnet,**
**dass** die eingesetzte Laserstrahltechnik ein direktschreibendes Laserablationsverfahren und/oder ein laserlithographisches Verfahren und/oder ein direktwirkendes maskenbezogenes Laserstrukturierungsverfahren ist.

## Claims

1. A steering device for vehicles, comprising a steering shaft (20), which has a surface with structure, a sensor (35) for determining the movement of said steering shaft, and a circuit (40) for evaluating the measuring signals of the sensor (35),
**characterised in that**
coded microstructures (31) are provided on the steering shaft (20) and/or on a device that is connected to the steering shaft in a non-positive manner,
**in that** the microstructures (31) have a thickness of 100nm to 100µm,
**in that** a sensor (35) is provided, which detects the microstructures (31) and outputs associated measuring signals, and
**in that** an electronic circuit (40) is provided, to which the measuring signals of the sensor (35) are fed and which outputs electronic signals for steering.

2. A steering device according to claim 1,
**characterised in that**
the microstructures (31) form a succession of sequences arranged in an axial direction on the steering shaft (20) and/or the device non-positively connected thereto.

3. A steering device according to claim 2,
**characterised in that**
each sequence comprises multiple and/or single structures arranged spatially in an azimuthal and/or axial direction and containing individual or block-type coding.

4. A steering device according to claim 2 or 3,
**characterised in that**
the sequences contain bit coding.

5. A steering device according to any of claims 2 to 4,
**characterised in that**
a plurality of sequences are combined in a block, the blocks being distinguishable from each other by coding.

6. A steering device according to any of claims 2 to 5,
**characterised in that**
the sequences arranged in an axial direction are present in redundant form, offset parallel more than once over the periphery of the steering shaft (20) and/or device.

7. A steering device according to any of the preceding claims,
**characterised in that**
the microstructures (31) are in complementary form.

8. A steering device according to any of the preceding claims,
**characterised in that**
the smallest details of the microstructures (31) have lateral dimensions of 5 nm to 5 mm.

9. A steering device according to claim 8,
**characterised in that**
the smallest details of the microstructures (31) have lateral dimensions of 1 µm to 1 mm.

10. A steering device according to any of the preceding claims,
**characterised in that**
the microstructures (31) have a level surface and are levelled by a planarising method.

11. A steering device according to any of the preceding claims,
**characterised in that**
the microstructures are built up from or covered with tribological hard-material layered systems.

12. A steering device according to claim 11,
**characterised in that**
the hard-material layered systems are single films or multi-layer films of TiN and/or TiAIN and/or TiCN films and/or aluminium oxide films and/or amorphous diamantine hydrocarbon films with and without metal doping and/or amorphous CN films and/or cubic boron nitride films and/or diamond films.

13. A steering device according to any of the preceding claims,
**characterised in that**
the sensors (35) are arranged in the form of a line and/or array.

14. A steering device according to any of the preceding claims,
**characterised in that**
the sensors (35) are optical sensors.

15. A steering device according to claim 14,
**characterised in that**
the sensors (35) are optical fibreglass sensors.

16. A steering device according to claim 15
**characterised in that**
the sensors (35) are fibre-optical double or multiple sensors.

17. A steering device according to any of claims 14 to 16,
**characterised in that**
the microstructures are in the form of a reflection hologram.

18. A steering device according to any of claims 1 to 13,
**characterised in that**
the sensors (35) are magnetic sensors.

19. A steering device according to claim 18,
**characterised in that**
the magnetic sensors are in a linear arrangement for reading a multi-bit code, particularly an 8-bit code.

20. A steering device according to claim 18 or 19,
**characterised in that**
the sensor (35) has a reading head with polar structures arranged on an arc matching the diameter of the steering shaft (20).

21. A method of making a steering device according to any of the preceding claims,
**characterised in that**
the microstructures on the steering shaft (20) or on the device non-positively connected to the shaft are produced using thin film methods, and that structuring is effected by photo-lithographic methods.

22. A method according to claim 21,
**characterised in that**
the thin-film method is a PVD and/or CVD method.

23. A method according to claim 21 or 22,
**characterised in that**
the microstructures are formed by a dry etching process and/or a wet-chemical etching process.

24. A method of making a steering device according to any of claims 1 to 20,
**characterised in that**
the microstructures are produced by a laser beam process.

25. A method according to claim 24,
**characterised in that**
the laser beam process used is a direct-writing laser ablation process and/or a laser-lithographic process and/or a direct-action mask-related laser-structuring process.

## Revendications

1. Dispositif de direction pour des véhicules, avec un arbre de direction (20), qui présente une surface avec une structure, avec un capteur (35) pour la détermination du mouvement de l'arbre de direction et avec un circuit (40) pour l'analyse des signaux de mesure du capteur (35), **caractérisé en ce que**
des microstructures (31) codées sont prévues sur l'arbre de direction (20) et/ou un appareil relié par force à l'arbre de direction,
**en ce que** les microstructures (31) présentent une épaisseur de 100 nm à 100 µm, **en ce qu'**il est prévu un capteur (35) qui détecte les microstructures (31) et émet des signaux de mesure attribués, et
**en ce qu'**il est prévu un circuit (40) électronique, auxquels les signaux de mesure du capteur (35) sont amenés et qui émet des signaux électroniques pour la commande.

2. Dispositif de direction selon la revendication 1, **caractérisé en ce que**
les microstructures (31) constituent une succession de séquences, qui sont disposées dans le sens axial sur l'arbre de direction (20) et/ou l'appareil ainsi relié par force.

3. Dispositif de direction selon la revendication 2, **caractérisé en ce que**
chaque séquence comprend des structures multiples et/ou des structures individuelles, qui sont disposées dans l'espace dans le sens azimutal et/ou axial et qui contiennent un codage individuel ou par bloc.

4. Dispositif de direction selon la revendication 2 ou 3, **caractérisé en ce que**
les séquences incluent un codage par bits.

5. Dispositif de direction selon l'une quelconque des revendications 2 à 4, **caractérisé en ce que**
plusieurs séquences sont regroupées en un bloc, les blocs pouvant être différenciés les uns des autres par un codage.

6. Dispositif de direction selon l'une quelconque des revendications 2 à 5, **caractérisé en ce que**
les séquences disposées dans le sens axial sont présentes dans une version redondante et décalée plusieurs fois parallèlement sur la périphérie de l'arbre de direction (20) et/ou de l'appareil.

7. Dispositif de direction selon l'une quelconque des revendications précédentes, **caractérisé en ce que**
les microstructures (31) sont réalisées de façon complémentaire.

8. Dispositif de direction selon l'une quelconque des revendications précédentes, **caractérisé en ce que**
les plus petits détails des microstructures (31) présentent des dimensions latérales de 5 nm à 5 mm.

9. Dispositif de direction selon la revendication 8, **caractérisé en ce que**
les plus petits détails des microstructures (31) présentent des dimensions latérales de 1 µm à 1 mm.

10. Dispositif de direction selon l'une quelconque des revendications précédentes, **caractérisé en ce que**
les microstructures (31) présentent une surface plane et sont mises au même niveau au moyen de la technique de planarisation.

11. Dispositif de direction selon l'une quelconque des revendications précédentes, **caractérisé en ce que**
les microstructures sont construites à partir de systèmes tribologiques de couche à substance dure ou sont recouvertes avec ces systèmes.

12. Dispositif de direction selon la revendication 11, **caractérisé en ce que**
les systèmes de couche à substance dure sont des couches individuelles ou des couches multicouches à base de TiN et/ou de TiAIN et/ou des couches de TiCN et/ou des couches d'oxyde d'aluminium et/ou des couches hydrocarbonées amorphes du type diamant avec ou sans dopage de métal et/ou des couches de CN amorphes et/ou des couches cubiques de nitrure de bore et/ou des couches de diamant.

13. Dispositif de direction selon l'une quelconque des revendications précédentes, **caractérisé en ce que**
les capteurs (35) sont disposés sous la forme d'une ligne et/ou d'un réseau.

14. Dispositif de direction selon l'une quelconque des revendications précédentes, **caractérisé en ce que**
les capteurs (35) sont des capteurs optiques.

15. Dispositif de direction selon la revendication 14, **caractérisé en ce que**
les capteurs (35) sont des capteurs optiques à fibre de verre.

16. Dispositif de direction selon la revendication 15, **caractérisé en ce que**
les capteurs (35) sont des capteurs doubles ou multiples à fibre optique.

17. Dispositif de direction selon l'une quelconque des revendications 14 à 16, **caractérisé en ce que**
les microstructures sont réalisées sous la forme d'hologramme à réflexion.

18. Dispositif de direction selon l'une quelconque des revendications 1 à 13, **caractérisé en ce que**
les capteurs (35) sont des capteurs magnétiques.

19. Dispositif de direction selon la revendication 18, **caractérisé en ce que**
les capteurs magnétiques sont disposés en forme de lignes pour la lecture d'un code de plusieurs bits, en particulier d'un code de 8 bits.

20. Dispositif de direction selon la revendication 18 ou la revendication 19, **caractérisé en ce que**
le capteur (35) présente une tête de lecture avec des structures de poster, qui sont disposées sur un arc de cercle adapté au diamètre de l'arbre de direction (20).

21. Procédé pour la fabrication d'un dispositif de direction selon l'une quelconque des revendications précédentes, **caractérisé en ce que**
les microstructures (31) sont générées avec une épaisseur de 5 nm à 1 mm sur l'arbre de direction (20) ou l'appareil relié par force à l'arbre de direction en utilisant des techniques des couches minces et **en ce que** la structuration s'effectue avec des techniques de photolithographie.

22. Procédé selon la revendication (21), **caractérisé en ce que**
la technique des couches minces est une technique PVD et/ou une technique CVD.

23. Procédé selon la revendication 21 ou 22, **caractérisé en ce que**
les microstructures sont réalisées par un procédé de décapage à sec et/ou par un procédé de décapage à chimie humide.

24. Procédé pour la fabrication d'un dispositif de direction selon l'une quelconque des revendications 1 à 20, **caractérisé en ce que**
les microstructures d'une technique de faisceau laser sont fabriquées.

25. Procédé selon la revendication 24, **caractérisé en ce que**
la technique de faisceau laser utilisée est un procédé d'ablation par laser à écriture directe et/ou un procédé de lithographie par laser et/ou un procédé de structuration par laser spécifique au masque et à effet direct.
